Europäisches Patentamt

European Patent Office

Office européen des brevets

(11) Publication number: **0 148 964**
A1

## (12) EUROPEAN PATENT APPLICATION

(21) Application number: **84100325.4**

(22) Date of filing: **12.01.84**

(51) Int. Cl.⁴: **A 01 B 73/00**
A 01 B 29/00, B 60 D 1/14

(43) Date of publication of application:
24.07.85 Bulletin 85/30

(84) Designated Contracting States:
AT BE CH DE FR GB IT LI LU NL SE

(71) Applicant: FLEMSTOFTE-MADS AMBY
MASKINFABRIKER A/S
Sandvedvej 59 B
DK-4250 Fuglebjerg(DK)

(72) Inventor: Nielsen, Holger Moller
Lindeparken 30
DK-4700 Naestved(DK)

(74) Representative: Vossius Vossius Tauchner Heunemann
Rauh
Siebertstrasse 4 P.O. Box 86 07 67
D-8000 München 86(DE)

(54) A traction hitch for three-unit vehicles.

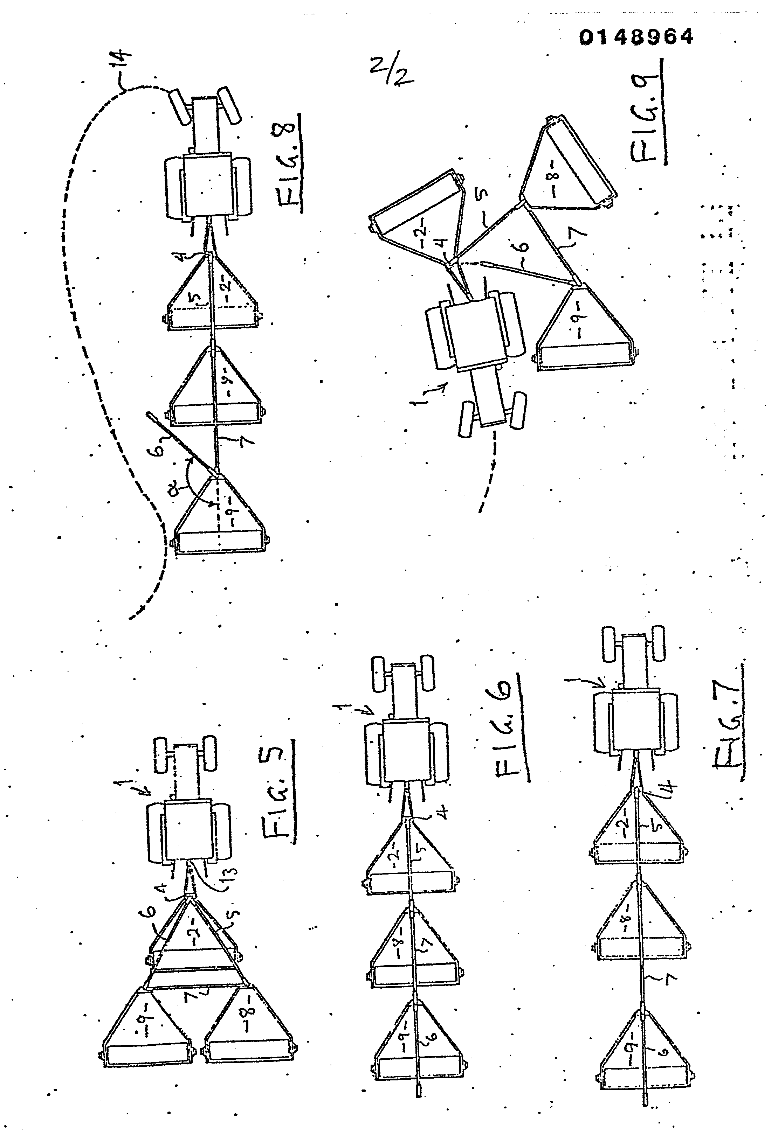

(57) In a traction hitch for connecting three vehicle units, e.g. roller units (2,8,9) to a tractor (1), the forwardmost ends of the two forwardmost triangle rods (5,6) are hinged to a pivot bolt (4) on the forwardmost unit (2) and each of their rearwardmost ends are hinged partly to each of the two rearwardmost units (8 and 9 resp.), partly to each end of the rearwardmost triangle rod (7), that may be varied in length, such as by being telescopic. In the working position the telescopic rod (7) has its maximum length and is kept locked in this length by releasable locking means, possibly remotely controlled from the tractor driver's seat. The assembly may be changed into a transport position with reduced width by releasing the locking means for the telescopic rod (7) and driving the tractor forward, so that the telescopic rod (7) is pushed together, i.e. shortened (Figure 4).

FIG. 4

EP 0 148 964 A1

Our Ref.: S 811 EP
Case     : 319-18/TVR

FLEMSTOFTE-MADS AMBY MASKINFABRIKER A/S

Fuglebjerg, Denmark

## A TRACTION HITCH FOR THREE-UNIT VEHICLES.

### TECHNICAL FIELD

The present invention relates to a hitch for three-unit vehicles of the kind set forth in the preamble of Claim 1.

### BACKGROUND ART

A traction hitch of the kind thus referred to is known from DK Patent Application No. 2462/77.

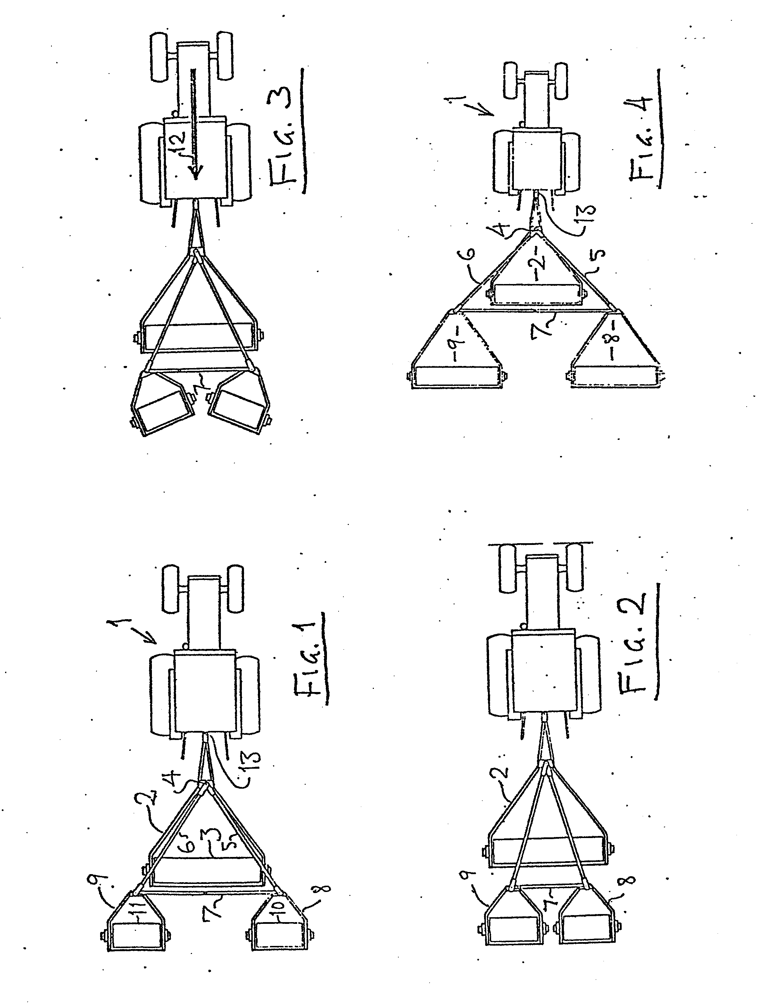

When the traction hitch according to the said DK Patent Application No. 2462/77 is to be transformed from the operating position (shown in the Application's Figure 1) to the transport position (shown in the Application's Figure 2), it is necessary to uncouple the tractor from a point 9 lying forwardmost in the operating position (shown in the top of said Figure 1) and re-couple it to another point 9 lying on one side of the hitch as seen in the operating position (to the left in said Figure 1), but forwardmost in the transport position (in the top of said Figure 2). During the concomitant adjustment of the triangle constituting the heart of the hitch, the telescopic triangle rod 7 is extended from the shortest length as shown in said Figure 1 to an increased length as shown in said Figure 2.

This arrangement makes it possible to reduce the width of the assembly comprising the traction hitch and the vehicle units, such as roller units, harrows etc., being pulled by the tractor by means of the hitch, with a view to transporting the complete assembly from one field to another along narrow country roads without having to dismantle the entire assembly every time it is to be moved from one field to another. It is, however, as stated above, necessary to uncouple the tractor from one point on the hitch and re-couple it to another point on the hitch before transportation can take place, and the reverse procedure has to be performed before the vehicle units can be used on the new site.

The uncoupling and re-coupling referred to above obviously represents a severe inconvenience when using agricultural machinery on a number of separate fields separated by narrow roads, passages or bridges.

DISCLOSURE OF THE INVENTION

It is the purpose of the present invention to indicate a traction hitch of the kind referred to, with which these operational steps are not required when altering the assembly from the operating position to the transport position and vice versa.

The object stated above is accomplished by means of a traction hitch of the kind referred to above, which according to the present invention is characterized by the features set forth in the Claims.

Thus, the traction hitch according to the invention mainly differs from the known hitch discussed above in that the longitudinally variable triangle rod is retracted instead of extended when changing from the operating position to the transport position. This makes it possible to reduce considerably the transverse distance between the two rear vehicle units, thus reducing the total width of the whole assembly by a corresponding amount, without changing the orientation of the hitch relative to the tractor, i.e. without shifting the tractor's coupling from one point on the hitch to another. The inconvenient un-coupling and re-coupling steps referred to above are thus completely eliminated when using the traction hitch according to the present invention.

When it is necessary to pass very narrow gates or bridges, a further reduction in the width of the complete assembly in its transport position can be provided by using the embodiment set forth in Claim 2, making it possible - still without uncoupling the tractor from the hitch mechanism - to arrange the vehicle units "to march in single file", i.e. with one behind the other like wagons in a train.

The embodiment set forth in Claim 3 makes it possible - again without uncoupling the tractor - to "fold" the train of vehicle units back upon itself to re-form the original triangle, that may be changed between the operating position with the longitudinally variable triangle rod at its maximum length and the "intermediate" transport position, referred to above in connection with Claim 1, with the said triangle rod at its minimum length and with the two rear vehicle units proceeding side by side and close to each other.

## BRIEF DESCRIPTION OF THE DRAWINGS

The invention will be explained in more detail in the following description with reference to the embodiments of a traction hitch according to the invention shown in the drawings, in which

Figure 1 shows an assembly consisting of three roller units and a tractor in an operating position,

Figure 2 shows the components of Figure 1 in a transport position with reduced width,

Figure 3 shows how to return from the position of Figure 2 to the position of Figure 1,

Figure 4 and 5 are diagrams corresponding to Figure 1 and Figure 2 respectively, with rollers of substantially the same width, and

Figures 6-9 illustrate how the roller assembly shown in Figure 4 and 5 may be changed into a "train" and back to the configuration shown in Figure 5.

## DESCRIPTION OF THE PREFERRED EMBODIMENT

In Figure 1 there is shown a tractor 1, to which a first roller unit 2 with a roller 3 is coupled. The roller 3 is diagrammatically shown in the form of a smooth roller, but in practice it may be constituted by any device with externally equivalent kinetic characteristics, such as a set of discs or knife discs, a toothed roller etc.. Strictly speaking the device in question need not even be able to rotate to make it possible to attain the desired special effect of the present invention, i.e. the invention may also be applied to harrows or the like. Instead of the roller unit 2 it is also possible to use a lawn mower of the type being used on large fields, in parks, etc., or an earth-working machine or sowing machine, fertilizer spreader etc..

On the forward part of the first roller unit 2 an upright pivot bolt 4 is placed. The forward ends of a first triangle rod 5 and a second triangle rod 6 are placed in hinged engagement with the pivot bolt 4, for this purpose having openings or holes corresponding to the pivot bolt 4. The rear ends of the first and the second triangle roads 5 and 6 respectively are interconnected by means of a third triangle rod 7, the length of which may be varied, and that will be referred to as a telescopic rod in the following. Each of the two rear corners in the triangle consisting of the rods 5, 6 and 7 is coupled to a second and third roller unit 8 and 9 respectively, each having a roller 10 and 11 respectively. For the roller units 8 and 9 and the rollers 10 and 11 the same considerations apply as are stated above with reference to the roller unit 2 and the roller 3.

In the operating position of the triangle 5, 6, 7 shown in Figure 1, the telescopic rod 7 is set to its maximum length or at least to a length considerably greater than its minimum length. When the tractor 1 is driven in the forward direction, i.e. towards the right in Figure 1, a component of the pulling forces transmitted through the first and the second triangle rod 5 and 6 respectively will tend to push the telescopic rod 7 together, for which reason it is provided with a locking means, e.g. a split pin or a bolt (not shown). The locking means may be arranged to be remotely controlled from the tractor 1. In the operating position shown in Figure 1, the three rollers 3, 10 and 11 may be used for working the surface of the soil in a width corresponding to the distance between the outermost ends of the rollers 10 and 11.

When the complete roller assembly and the tractor are to be transported, such as along a field road of limited width, this may be done without dismantling the assembly by releasing the locking means (not shown) in or on the telescopic rod 7 - e.g. by remote control from the driver's seat in the tractor 1 - whereupon the tractor is driven in the forward direction. The components of the pulling forces in the first and second triangle rod 5 and 6 respectively will then push the telescopic rod 7 together to the length shown in Figure 2, so that the second and third roller units 8 and 9 respectively will approach each other towards a transport position, in which they occupy a width only slightly greater than the width of the first roller unit 2 - all, of course, depending on the relative widths of the various roller units. In the transport position shown in Figure 2 it is not necessary to lock the telescopic rod 7 against altering its length, as long as the tractor 1 is being driven in the forward direction, but to prevent problems arising from occasional rearward movement it may be advantageous to lock the telescopic rod 7 in this position as well, such as by using locking means (not shown) similar to the locking means mentioned above.

When the tractor 1 and the complete roller assembly 2, 8, 9 have been transported to the new site and the position of the roller assembly is to be changed back into the operating position, this is - as shown in Figure 3 - accomplished by driving the tractor 1 in the rearward direction as indicated by the arrow 12, whereby the pulling force components referred to above change into pushing force components, causing the telescopic rod 7 to increase its length, provided that the locking means has been released. The process is continued until the telescopic rod 7 has the desired length, e.g. as shown in Figure 1, and then the rod 7 is locked in this length, whereupon normal operation may be resumed.

It will be obvious that for the telescopic rod 7 to be able to decrease and increase in length as discussed above, it is a necessary condition that the interconnections between the three triangle rods 5, 6 and 7 are in the form of hinge joints or the like of a type permitting at least those angular variations corresponding to the variations in the length of the telescopic rod 7. In practice it is, however, more expedient to use simple joints, e.g. with a fork and cross-bolt, permitting considerably greater angular excursions right up to 180° or more, and this will also be necessary in the embodiment to be described below. It will also be obvious that the triangle formed from the three triangle rods 5, 6 and 7 will be able to pivot freely about the pivot bolt 4 on the first roller unit 2 in the same manner as this roller unit 2 may pivot freely about a pivot bolt 13, hook or the like on the tractor 1, corresponding to the pivot bolt 4.

In the embodiment of the roller assembly shown in Figures 4-9, differing from the embodiment shown in Figures 1-3 mainly in the relative sizes of the roller units, the three roller units 2, 8 and 9 have essentially the same width. In the transport position shown in Figure 5, the assembly will thus have a considerable width, as the two rear roller units 8 and 9 together occupy well over twice the width of the roller unit 2. In order to reduce the assembly's transport width further, the forwardmost end of the second triangle rod 6 is unhooked from the pivot bolt 4, whereupon the tractor 1 is driven in the forward direction. This results in the formation of a "train" consisting of the tractor 1, the first roller unit 2, the first triangle rod 5, the second roller unit 8, the telescopic (third triangle) rod 7 and the third roller unit 9 in the order mentioned with the second triangle rod 6 lying loose on the third roller unit 9, the width of this train - cf. Figure 6 - only corresponding to the width of a single roller unit, or the widest one, if they have different widths. Such a train may be propelled without hindrance on roads, such as narrow field roads, that are too narrow for transportation of the roller assembly in the transport position shown in Figure 5.

In the transport position shown in Figure 6 the telescopic rod 7 is adjusted to its shorter length corresponding to the situation shown in Figure 5 having been the starting position, and it will normally be advantageous to let the rod 7 remain with this length during the transport. When, however, it is desired to return the roller assembly to the operating position shown in Figure 4, then one may proceed as shown in Figures 7-9. Firstly, as shown in Figure 7, the tractor 1 and the first and second roller units 2 and 8 respectively are driven a short distance in the forward direction, thus extending the telescopic rod 7 - the locking means having been released previously - to its maximum length. Then the second triangle rod 6 is swung in the forward direction, e.g. by hand, through an angle α of approximately 135° to the position shown in Figure 8, while choosing a side for this movement, where there is room for the tractor 1 to be driven around towards the rear of the train. In the example shown, the left hand side (as seen in the direction of normal working movement) has been chosen.

When the second triangle rod 6 has been placed as shown in Figure 8, the tractor 1 is driven in the forward direction and through a curve to the left, so that its left-hand front wheel will follow a track 14 towards and closely past the side of the third roller unit 9. During this movement the first and second roller units 2 and 8 respectively as shown in Figure 9 follow the tractor 1 to a position, in which the free end of the second triangle rod 6 may be re-hooked on the pivot bolt 4 situated on the forwardmost part of the first roller unit 2. The triangle consisting of the rods 5, 6 and 7 has now been re-constituted, and - with the exception of certain temporary differences in the angles between the component parts of the roller assembly - the situation is now identical to the one shown in Figure 5, i.e. the transport position discussed previously. To return the roller assembly to the operating position shown in Figure 4, it is only necessary to align all the roller units with the operating direction by driving the tractor 1 through a short distance in the forward direction - thus re-creating the situation shown in Figure 5, and then driving the tractor 1 in the rearward direction until the telescopic rod 7 has re-gained its original, maximum operating length as shown in Figure 4.

By using the traction hitch according to the invention it is possible to switch the assembly between the working position and various transportation positions with reduced width, without the use of tools, without uncoupling the tractor and while utilizing the tractive force of the tractor (1) in the switching process.

CLAIMS

1. A hitch for three-unit vehicles for coupling an assembly consisting of three vehicle units (2,8,9), e.g. for working earth surfaces or crops, to a tractor (1), and comprising

a) a first triangle rod (5) and a second triangle rod (6), the forwardmost ends of which are adapted to be hingedly joined to each other and to a traction member (4) on or adjacent to a first one (2) of said vehicle units, and the rearwardmost ends of which are adapted to be coupled to a second one (8) and a third one (9) of said vehicle units respectively, and

b) a third, longitudinally variable triangle rod (7) having each of its two ends hingedly joined to the first (5) and the second (6) triangle rod respectively at or adjacent to the rearwardmost end of each rod, said third triangle rod (7) being provided with releasable locking means for preventing undesired length variations,

c) the arrangement being such, that the width of the hitch and thereby the width of the strip of earth being swept by the vehicle units may be altered by varying the length of the third, longitudinally variable triangle rod (7) between an operating position, in which the distance between the second (8) and the third (9) vehicle units as measured transverse to the operating direction is at a maximum, and a transport position, in which the width of the strip of earth swept by the assembly is considerable reduced,

c h a r a c t e r i z e d  in

d) that the third, longitudinally variable triangle rod (7) is adapted to have its maximum length in the operating position.

2.     A hitch according to claim 1, c h a r a c t e r -
i z e d  in

a)    that the hinge joint between the forwardmost end of
      the first or second triangle rod (5 or 6) and the
      traction member (4) on the first vehicle unit (2)
      is a releasable joint, and

b)    that the hinge joints between the triangle rods (5,
      6,7) not being released after the
      release of the said releasable joint are so arranged
      that they at least permit the two triangle rods being
      interconnected by each joint to extend in the
      straight-line alignment with each other.


3.     A hitch according to claim 1 or claim 2, c h a r -
a c t e r i z e d  in that the traction member (4) on the
first vehicle unit (2) is situated on the forwardmost
part of said unit, preferably as close as possible to the
first vehicle unit's (2) coupling member for the tractor's
(1) traction coupling member (13), while still making it
possible for that one (6) of the triangle
rods, the hinged joint of which with the traction member
(4) on the first vehicle unit (2) has been released, to
be hingedly re-connected to the said traction member (4),
when the assembly consisting of the three vehicle units
(2,8,9) by means of the tractor (1) is manoeuvered from
a condition, in which the units lie in a row behind each
other , to a condition, in which the relative positions of the hinged joints between the three
triangle rods (5,6,7) correspond to their relative positions in said rod triangle.

Fig. 1

Fig. 2

Fig. 3

Fig. 4

0148964

FIG.5

FIG.6

FIG.7

FIG.8

FIG.9

2/2

0148964

European Patent Office

**EUROPEAN SEARCH REPORT**

Application number

EP 84 10 0325

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A- 160 350 (MAYNARD) <br> * Whole document * <br><br> --- | 1 | A 01 B 73/00 <br> A 01 B 29/00 <br> B 60 D 1/14 |
| A | US-A-2 808 273 (FRENCH) <br> * Whole document * <br><br> --- | 1 | |
| A | GB-A-2 048 032 (HUNT & CO.) <br><br> --- | | |
| A | US-A-1 636 802 (BOZARD) <br><br> --- | | |
| A | US-A-2 357 761 (PEACOCK) <br><br> ----- | | |

TECHNICAL FIELDS
SEARCHED (Int. Cl. ³)

A 01 B
A 01 D
B 60 D

The present search report has been drawn up for all claims

| Place of search | Date of completion of the search | Examiner |
|---|---|---|
| THE HAGUE | 31-07-1984 | VERDOODT S.J.M. |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO Form 1503. 03.82